# EUROPEAN PATENT APPLICATION

(11) **EP 0 919 286 A2**
(43) Date of publication of application: **02.06.1999**
(21) Application number: 98122250.8
(22) Date of filing: 23.11.1998
(51) Int. Cl.: B03C 3/60, B03C 3/74, F24F 3/16

(54) **Method for self-cleaning a dust collection electrode of an electrostatic precipitator for air conditioner use**

(30) Priority: 26.11.1997 JP 324808/97
(71) Applicant: Funai Electric Co., Ltd., Daito-shi, Osaka 574-0013 (JP)
(72) Inventor: Hironaka, Yasumasa c/o Funai Electric Co., Ltd., Daito-shi, Osaka 574-0031 (JP); Uemura, Yoriko, Daito-shi, Osaka 574-0031 (JP)
(74) Representative: Schmitz, Hans-Werner, Dipl.-Ing.

(57) **Abstract**

In an electronic dust collector or an air conditioner equipped with said dust collector for collecting dust contained in air by a discharge effect between the discharge electrode and the dust collection electrode, there is provided a catalyst layer for oxidizing and decomposing the deposited dust on the surface of the dust collection electrode, which contains a heater for self-cleaning. By controlling passage of electricity to the heater so as to have the dust collection electrode show moderate temperature elevation during the self-cleaning of the dust collection electrode, it becomes possible to make stepwise oxidation and decomposition of the dust deposited on the dust collection electrode, thereby cleaning the dust collection electrode by removing the dust on the dust collection electrode while suppressing generation of smoke and odor by firing of dust.

## Description

### BACKGROUND OF THE INVENTION

### 1. Field of the Invention

The present invention relates to a method for self-cleaning a dust collection electrode of an electronic dust collector, an electronic dust collector having self-cleaning function, and an air conditioner equipped with said electronic dust collector.

### 2. Description of the Prior Art

Hitherto, as a device for purifying interior air, there has been known a deodorizing equipment. This deodorizing equipment is furnished with a deodorizing catalyst, which adsorbs the odorous components contained in room air such as tobacco smoke to carry out deodorizing air in room. However, such deodorizing equipment has drawback in incapability of removing dust having relatively large particle size such as cotton dust, and low air purification capacity. Then, as an air purification equipment capable of removing dust such as cotton dust, there has been known an electronic dust collector. Said electronic dust collector is equipped with a discharge electrode and a collection electrode, so that a high voltage is applied between these electrodes, thereby ionizing the dust and fine particles contained in the surrounding air from the discharge electrode, and adsorbing the dust to the collection electrode to purify air. In such electronic dust collector, in order to operate the device for a long period of time without maintenance, there has been contrived a self-cleaning type (maintenance-free type) one in which the dust collection electrode is provided with a heater, with which the dust adsorbed to the collection electrode is removed by oxidation and decomposition.

Besides, there is known one having an interior unit incorporated with an electronic dust collector so as to enhance the function of air conditioner. For example, as shown in Japanese Patent Publication (Unexamined) No. SHO 64-28427, an electronic dust collector is provided on the wind side of the heat exchanger, i.e., between the front grill and the heat exchanger provided on the depth side thereof, thereby making the dust contained in the air taken into the apparatus be adsorbed to the dust collection electrode to effect air cleaning. In this manner, by incorporating the dust collector in the internal unit of the air conditioner, the air conditioner is provided with the function of air cleaner in addition to the original air conditioning function.

However, in the air conditioner with electronic dust collector as shown in the above publication, because of the provision of the dust collector on the wind side of the heat exchanger, induction of air is inhibited to cause a problem of lowering the original air conditioning function. In this connection, there has been contrived an air conditioner with electronic dust collector having an electronic dust collector comprising a linear discharge electrode and a planar dust collection electrode provided in the casing of the interior unit on the lee side of the heat exchanger. However, when the dust collector is provided in the casing, a problem of difficulty to make maintenance of the dust collection electrode occurs. To cope with this, in the same manner as in the above electronic dust collector, there has been designed a self-cleaning type (maintenance-free type) air conditioner with electronic dust collector wherein, as a dust collection device, a heater is provided in the dust collection electrode so as to decompose by oxidation and remove the dust adsorbed to the dust collection electrode by said heater.

However, in such self-cleaning type electronic dust collector and electronic air conditioner with electronic dust collector, there is no consideration on the heater temperature elevation rate or the like, and the heater temperature is suddenly elevated during the self-cleaning. Therefore, there were cases to cause firing of dust and generate odor and smoke.

### SUMMARY OF THE INVENTION

The present invention has been made to dissolve the problems as noted above. Its object is to provide a method for self-cleaning a dust collection electrode of an electronic dust collector, an electronic dust collector having self-cleaning function, and an air conditioner equipped with said electronic dust collector which can suppress firing, smoking, or odor by not increasing the temperature of the dust collection electrode at a stroke but slowly increasing the temperature to decompose the dust or fine particles stepwise.

In order to attain the above object, the present invention provides a method for self-cleaning a dust collection electrode of an electronic dust collector comprising a discharge electrode and a dust collection electrode provided at a predetermined distance with a high voltage applicable between them, said dust collector being designed to collect dust contained in air onto the dust collection electrode by way of discharge effect, the dust collection electrode being equipped with a heater for self-cleaning said dust collection electrode, and with a catalyst for oxidizing and decomposing the deposited dust on its surface; characterized by slowly increasing the temperature by the heater to oxidize and decompose the dust deposited on said catalyst stepwise to effect self-cleaning of said dust collection electrode.

In the above method, during the dust collection operation of the electronic dust collector, a high voltage is applied to the area between the discharge electrode and the dust collection electrode, the dust contained in the air introduced in the dust collector is ionized by the discharge electrode and adsorbed to the dust collection electrode, by which the sucked air is purified. Further, during the self-cleaning, the heater is controlled by controlling electric current to cause the dust collection electrode to be mildly subjected to temperature elevation, by which the dust (containing organic substance) and fine particles deposited on the electrode are oxidized and decomposed stepwise by the catalytic action of the catalyst, and the dust is ultimately formed into colorless, odorless gases of carbon dioxide and vapor. As a result, while the generation of smoke and odor by firing of dust is suppressed, the dust on the dust collection electrode is removed and the dust collection electrode is self-cleaned.

It is also desirable, during the self-cleaning, to control the heater by controlling electric current so as to bring the surface temperature of the dust collection electrode from room temperature to the temperature below the firing temperature of the dust component substance.

Also, the present invention provides, in a dust collection electrode of an electronic dust collector comprising a discharge electrode and a dust collection electrode provided at a predetermined distance with a high voltage applicable between them, said dust collector being designed to collect dust contained in air onto the dust collection electrode by way of discharge effect, the dust collection electrode being equipped with a heater for self-cleaning said dust collection electrode, and with a catalyst for oxidizing and decomposing the deposited dust on its surface; characterized by controlling the electric current to the surface of the dust collection electrode so as to show slow temperature rise during the self-cleaning of said dust collection electrode.

According to the above constitution, during the self-cleaning the dust collection electrode is mildly heated under control of electricity application by the control means, and there is obtained the same effect as that mentioned above. Normally, this self-cleaning may be practiced as necessary after completion of the dust collection operation.

Also, it is desirable for the above control means to control electric current to the heater so that the surface temperature of the dust collection electrode gradually rises from room temperature to the temperature less than the firing temperature of the dust component material during the self-cleaning.

Furthermore, the present invention provides an air conditioner with electronic dust collector having a self-cleaning function for purifying air by collecting dust in air by the use of electric discharge effect, comprising: a casing having an air suction port and an air blow port; a heat exchanger provided in said casing facing to the suction port; a fan for circulating air into the blow port from the suction port through the heat exchanger and air passages in the casing; and an electronic dust collector arrayed in said air passages for collecting dust in air which passes through the air passages by using the discharge effect between the discharge electrode and the dust collection electrode, the dust collection electrode being equipped with a heater for self-cleaning said dust collection electrode, and with a catalyst for oxidizing and decomposing the deposited dust on its surface; characterized by having a self-cleaning function with provision of a control means for controlling the electric current to the heater so that the surface temperature of the dust collection electrode gradually rises during the self-cleaning of the dust collection electrode.

In this constitution, during the air conditioning operation, by driving of the heat exchanger and the fan, the air taken in from the suction port of the casing undergoes cooling or heating by the heat exchanger, alter which it is circulated in the air passage. At this time, due to the application of a high voltage between the discharge electrode of the electronic dust collector provided on the air passage and the dust collection electrode, the dust contained in the air passing through the air passage is ionized and deposited on the dust collection electrode. By this step, the sucked air is cleaned and blown from the blow port. Further, during the self-cleaning of the dust collection electrode, by the energizing control to the heater, the dust collection electrode is mildly subjected to temperature rise to give the action similar to that described above. This self-cleaning may normally be carried out as necessary alter stopping the cooling and heating operation in consideration of the efficiency of cooling or heating.

The above control means desirably control the electric current to the heater so that the surface temperature of the dust collection electrode gradually rises from room temperature to the temperature less than the firing temperature of the dust component material during the self-cleaning.

### BRIEF DESCRIPTION OF THE DRAWINGS

Hereinafter, regarding the self-cleaning method of the dust collection electrode and the electronic dust collector to which the self-cleaning function is applied according to an embodiment of the present invention, the case of applying to the air conditioner is illustrated with reference to the drawings.
Fig. 1 is a partially broken perspective view of an air conditioner with electronic dust collector according to an embodiment of the present invention.
Fig. 2 is a side view of an air conditioner with electronic dust collector showing the flow of air during air conditioning.
Fig. 3 is a partial perspective view of an electronic dust collector.
Fig. 4 is a partial side view of an electronic dust collector.
Fig. 5 is a partial bottom view of an electronic dust collector.
Fig. 6 is a sectional view of an essential part of the dust collector.
Fig. 7 is a view showing the relations between the surface temperature of the dust collection electrode and the time during the self-cleaning.

### DETAILED DESCRIPTION OF THE PREFERRED EMBODIMENT OF THE PRESENT INVENTION

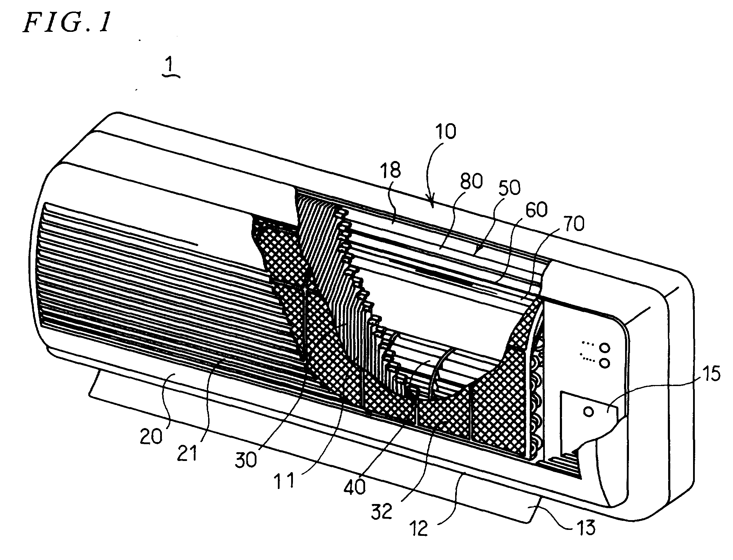

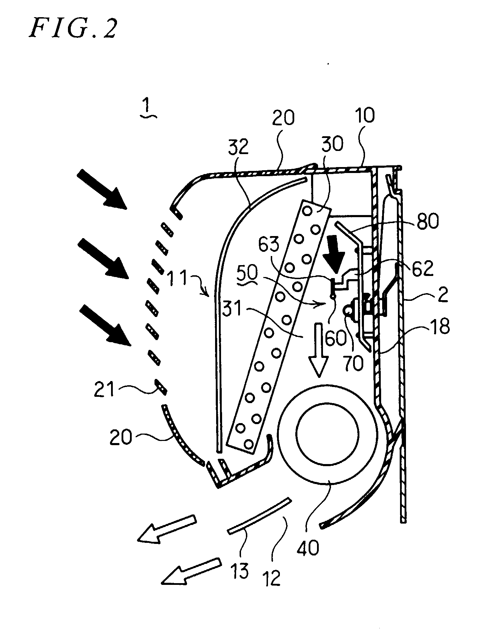

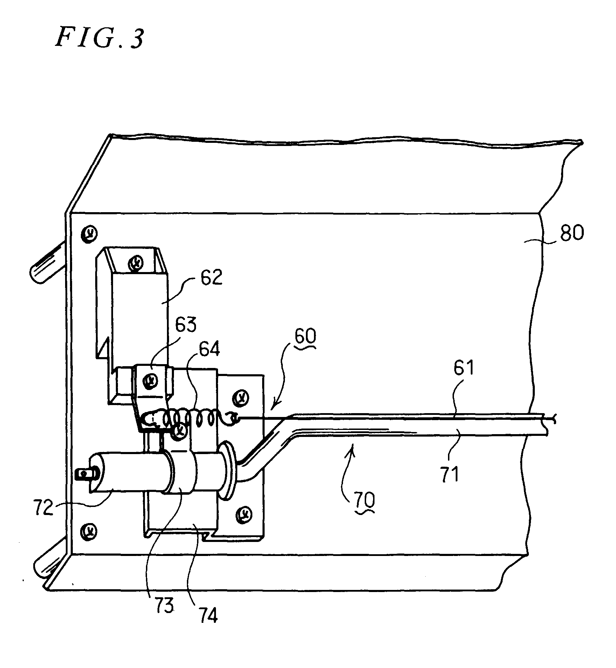

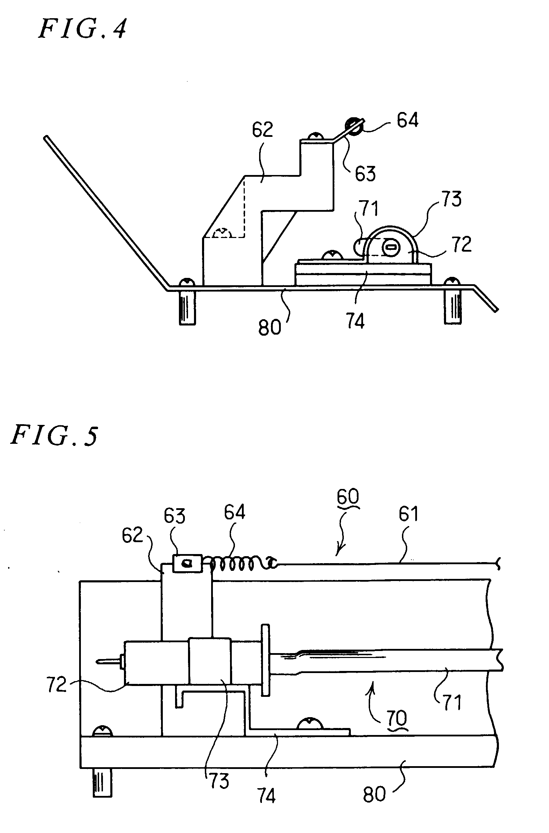

Referring to Fig. 1 through Fig. 5, an air conditioner with dust collector 1 has both the air conditioning function for cooling or heating air in room and the dust collection function for removing dust contained in interior air to clean air, and is to be fixed to wall or the like through a fixing plate 2. The air conditioner 1 has a casing 10 which opens at its front face as an air suction port 11 and provided with an air blow port 12 beneath it, a front panel 20 having a front grill 21 and to be fitted to the air suction port 11 of the casing 10, a heat exchanger 30 provided in the casing 10 facing the suction port 11 of the casing 10, a cross-flow type fan 40 provided on the depth side of the blow port 12 so as to circulate air from the suction port 11 to the blow port 12 through the heat exchanger 30, and an electronic dust collector 50 disposed on the air passage 31 on the back side of the heat exchanger 30. A filter 32 is provided between the front panel 20 and the heat exchanger 30. An angle adjusting type looper 13 is provided at the blow port 12 of the casing 10. In the casing 10 there is provided a control circuit 15 (control means) for controlling the whole of the air conditioner 1. The heat exchanger 30 is connected by a heat exchanger of an external unit (not illustrated) and a coolant pipe.

The electronic dust collector 50 is constituted by a horizontally stretched linear discharge electrode 60, a bar-like dust collection electrode 70 which is provided at a predetermined distance from the discharge electrode 60 and which contains a sheathed heater 71 for self-cleaning, and a heat shielding plate 80 for holding the discharge electrode 60 and the dust collection electrode 70. The discharge electrode 60 and the dust collection electrode 70 are fixed to the surface of the vertical back plate part 18 so as to face the inside of the air passage 31.

The discharge line 61 which constitutes a discharge electrode 60 is held through a tensile spring 64 to the electrode 63 which is fixed at both ends to the holding member 62, and fixed at a set position by the tension of the tensile spring 64. To the discharge line 61 a voltage is applied from the electrode 63 through the tensile spring 64. The dust collection electrode 70 is disposed on the lee side of the air passage 31 to the discharge electrode 60 at a predetermined distance, and the lengthwise end parts 72 of dust collection electrode 70 are fixed to the holding members 74 by the stopper members 73. To the discharge electrode 60 and the dust collection electrode 70 the positive DC voltage and the negative DC voltage are to be applied, respectively at the time of the air purification motion. The holding member 62 and the holding member 74 are to be fixed to the heat shielding plate 80.

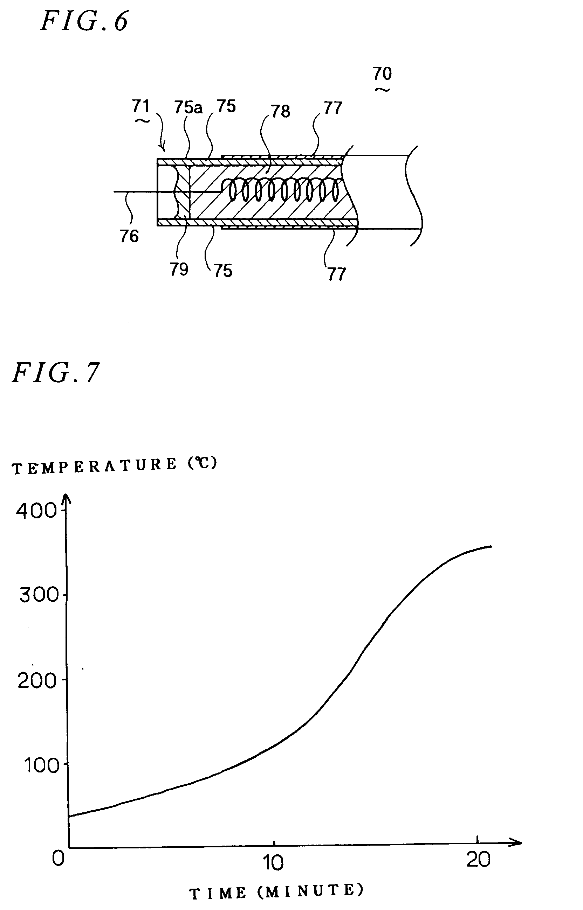

In Fig. 6, the dust collection electrode 70 self-contains a sheathed heater 71. The sheathed heater 71 comprises an aluminum metal tube 75 and an electric resistance line 76 inserted in the metal tube 75. On the surface of the metal tube 75 there are formed the catalyst layers 77 comprising the catalytic substances represented by zeolite, active alumina, manganese dioxide, etc. are formed by application or welding. Zeolite (generally called zeolite) has a three-dimensional net structure having hollow parts, which accelerate the reaction of the molecules adsorbed to the inside of the hollow part. The active alumina (Al₂O₃) is alumina powder having high adsorption capacity; it has small crystal particle size, large surface area, and is suitable as a catalyst, catalyst carrier, and adsorbing agent. Manganese dioxide (MnO₂) has a function as a catalyst in the same manner as in zeolite and active alumina as stated above. Further, in order to prevent mutual contact between the metal tube 75 and the electric resistance line 76, magnesium oxide 78 is filled in the metal tube 75. The end part 75a of the metal tube 75 is sealed by the glass sealing member 79. This sheathed heater 71 may be of small energy per unit area, e.g., approximately 180W (Watt).

Next, the operation of the air conditioner 1 with dust collector constituted as above is described. During the air conditioning, by operating the heat exchanger 30 and the fan 40, air in the room passes through the front grill 21 of the front panel 20 and the filter 32 and is introduced in the casing 10, and alter being cooled or heated in the course of the passage through the heat exchanger 30, it flows through the air passage 31 of the back side vertically down from above. The air which is led through the air passage 31 passes the peripheral part of the dust collector 50. Here, a high voltage is applied to the position between the discharge electrode 60 and the dust collection electrode 70 of the dust collector 50 to generate corona discharge between the two electrodes 60 and 70. As a result, dust such as fine particles of tar (oil smoke) of tobacco present in the surrounding air of the discharge electrode 60 or cotton dust has deposition of positive ion formed by corona, and the fine particles and dust are positively charged. As a result, they are attracted by the Coulomb force between the two electrodes toward the dust collection electrode 70 and caught by the dust collection electrode 70 to effect electric dust collection. In case the fine particles of odorous components are contained in air, the odorous components are adsorbed by the catalyst layer 77 of the dust collection electrode 70 and deodorized. Thus, the air which passed through the heat exchanger 30 is purified in the course of passing through the air passage 31 on the back side thereof and discharged into the room through the air blow port 12.

Here, because the dust collection electrode 70 is disposed by displacing to the lee side of the discharge electrode 60, by the wind force of air flowing through the air passage 31 and Coulomb force sustained by dust from the dust collection electrode 70, the dust is to be directed toward the dust collection electrode 70. By this step, it becomes possible to have a larger amount of dust deposited on the dust collection electrode 70 to improve the dust collection effect by the dust collector 50.

Referring to Fig. 7, a self-cleaning method of the dust collection electrode 70 is explained. Self-cleaning is carried out as necessary alter completion of the air conditioning action of the air conditioner 1. It may be carried out at the time of the stoppage of the air conditioning operation alter lapse of the predetermined air conditioning operation time. In the control circuit 15, electric current to the heater 71 is controlled so that the surface temperature of the dust collection electrode 70 slowly increased in about 20 minutes (i.e., about 15°C/min.) from room temperature (18°C) to about 350°C.

By such control, dust of soot or cotton dust which adhered to the surface of the dust collection electrode 70 is gradually decomposed by oxidation under the catalytic action of the catalyst and finally converted to colorless, odorless carbon dioxide and vapor at about the temperature exceeding 300°C and removed from the dust collection electrode 70. As such, by oxidizing the dust stepwise, the dust collection electrode 70 can be cleaned while suppressing generation of smoke and odor resulting from firing of dust. Since the ultimate surface temperature of the dust collection electrode 70 is controlled to a level lower than the firing temperature of the dust component substance, there is no apprehension for the dust to cause fire or smoke.

Also, in the control circuit 15, the duty of the current or voltage to be applied to the electric resistance line 76 of the sheathed heater 71 may be varied to control the exothermic amount of the sheathed heater 71. As there is used as a sheathed heater 71 one having about 180 W of small energy per unit area, even if the energizing control with the control circuit 15 becomes the duty 100 %, it is desirable for the ultimate temperature of the sheathed heater to be controlled to a level not exceeding 350°C. Furthermore, by suppressing to a temperature lower than 400°C which is the lower limit of the firing temperature of the substance contained in surroundings, even if the plastic member constituting the casing 10 or the like comes into contact with the dust collection electrode 70, firing of plastics can be prevented.

Without being limited to the foregoing embodiment, various modifications are feasible in the present invention. For example, the self-cleaning method of the present invention can be applied to an electronic dust collector having only the air-cleaning function, and even in such a case, self-cleaning of the electronic dust collection electrode can be made by removing dust on the dust collection electrode while suppressing generation of smoke or odor caused by firing of dust. In this electronic dust collector, the self-cleaning operation may be performed during the cleaning operation alter lapse of the predetermined time for the air cleaning operation. Alternatively, the self-cleaning method of the present invention may be applied to the method for reproducing the catalyst on the deodorizing apparatus of the adsorptive type heat decomposition system.

## Claims

1. A method for self-cleaning a dust collection electrode of an electronic dust collector comprising a discharge electrode ad a dust collection electrode provided at a predetermined distance with a high voltage applicable between them, said dust collector being designed to collect dust contained in air onto the dust collection electrode by way of discharge effect generating between the discharge electrode and the dust collection electrode,
the dust collection electrode being equipped with a heater for self-cleaning said dust collection electrode, and with a catalyst for oxidizing and decomposing the deposited dust on its surface;
characterized by slowly increasing the temperature by the heater to oxidize and decompose the dust deposited on said catalyst stepwise to effect self-cleaning of said dust collection electrode.

2. The method for self-cleaning the dust collection electrode of an electronic dust collector according to claim 1, which controls electric current to the heater so that the surface temperature of the dust collection electrode gradually rises from room temperature to the temperature less than the firing temperature of the dust component material during the self-cleaning.

3. An electronic dust collector comprising a discharge electrode and a dust collection electrode provided at a predetermined distance with a high voltage applicable between them, said dust collector being designed to collect dust contained in air onto the dust collection electrode by way of discharge effect generating between the discharge electrode and the dust collection electrode,
the dust collection electrode being equipped with a heater for self-cleaning said dust collection electrode, and with a catalyst for oxidizing and decomposing the deposited dust on its surface;
characterized by having a self-cleaning function with provision of a control means for controlling the electric current to the heater so that the surface temperature of the dust collection electrode gradually rises during the self-cleaning of the dust collection electrode.

4. The electronic dust collector having a self-cleaning function according to claim 3, wherein said control means control the application of electricity to the heater so that the surface temperature of the dust collection electrode gradually rises from room temperature to the temperature less than the firing temperature of the dust component material during the self-cleaning.

5. An air conditioner with electronic dust collector having a self-cleaning function for purifying air by collecting dust in air by the use of electric discharge effect, comprising:
a casing having an air suction port and an air blow port; a heat exchanger provided in said casing facing to the suction port; a fan for circulating air into the blow port from the suction port through the heat exchanger and air passages in the casing; and an electronic dust collector arrayed in said air passages for collecting dust in air which passes through the air passages by using the discharge effect between the discharge electrode and the dust collection electrode,
the dust collection electrode being equipped with a heater for self-cleaning said dust collection electrode, and with a catalyst for oxidizing and decomposing the deposited dust on its surface;
characterized by having a self-cleaning function with provision of a control means for controlling the electric current to the heater so that the surface temperature of the dust collection electrode gradually rises during the self-cleaning of the dust collection electrode.

6. The air conditioner with electronic dust collector having a self-cleaning function according to claim 5, wherein the control means control the electric current to the heater so that the surface temperature of the dust collection electrode gradually rises from room temperature to the temperature less than the firing temperature of the dust component material during the self-cleaning.
